# EUROPÄISCHE PATENTSCHRIFT

(11) **EP 1 286 750 B1**
(45) Veröffentlichungstag und Bekanntmachung des Hinweises auf die Patenterteilung: **04.04.2007**
(21) Anmeldenummer: 01947274.5
(22) Anmeldetag: 11.05.2001
(51) Int. Cl.: B01D 46/24, B01D 46/52

(54) **FILTEREINRICHTUNG**
FILTER DEVICE
DISPOSITIF DE FILTRE

(30) Priorität: 29.05.2000 DE 10026437
(43) Veröffentlichungstag der Anmeldung: 05.03.2003
(73) Patentinhaber: Mann + Hummel GmbH, 71638 Ludwigsburg (DE)
(72) Erfinder: RIEGER, Mario, 71691 Freiberg (DE); AMANN, Matthias, 71686 Remseck (DE)
(74) Vertreter: Voth, Gerhard
(86) Internationale Anmeldenummer: PCT/EP2001/005386
(87) Internationale Veröffentlichungsnummer: WO 2001/091884

(56) Entgegenhaltungen:
- DE-A- 3 911 153
- DE-A- 4 031 014

## Beschreibung

### Stand der Technik

Die Erfindung betrifft eine Filtereinrichtung nach dem Oberbegriff des unabhängigen Anspruchs 1.

Eine solche Filtereinrichtung ist bekannt. Üblicherweise wird der Filtereinsatz in der Filtereinrichtung mit einer Spannschraube befestigt, hierzu sind an dem Gehäuse Befestigungselemente vorgesehen. Es besteht bei den bekannten Filtereinsätzen auch die Möglichkeit durch einen Deckel der in axialer Richtung auf das Gehäuse aufgesetzt wird, den Filtereinsatz in dem Gehäuse zu fixieren. Sofern der im wesentlichen zylinderförmig aufgebaute Filtereinsatz unter beengten Platzverhältnissen ein- oder ausgebaut werden muss, kann ein axial gerichtetes Abziehen oder Aufziehen nicht erfolgen. In diesen Fällen ist es erforderlich, den Filtereinsatz aus dem Gehäuse herauszuheben, dass heißt das Gehäuse ist mit einem Deckel verschlossen, der einen Teil der Mantelfläche abdeckt. Der Filtereinsatz kann nach dem Öffnen des Deckels aus dem Gehäuse herausgehoben werden und ein neuer Filtereinsatz ist einsetzbar.

Ein Problem bei diesem Gehäuseaufbau besteht darin, dass eine Axialverschiebung des Filtereinsatzes zum Abdichten zwischen Rohluft- und Reinluftbereich erforderlich ist. Dieses axiale Verschieben ist nur mit speziellen Schraub- oder Bajonettverschlüssen oder speziellen Aufnahmevorrichtungen für den Filtereinsatz möglich.

Der Erfindung liegt die Aufgabe zugrunde, eine Filtereinrichtung zu schaffen, bei welcher der Filtereinsatz unter beengten Platzverhältnissen ein und ausgebaut werden kann und ein zuverlässige und einfache Abdichtung zwischen Rohluftbereich und Reinluftbereich gewährt wird.

Diese Aufgabe wird ausgehend von dem Oberbegriff des unabhängigen Anspruchs 1 durch dessen kennzeichnenden Merkmale gelöst.

### Vorteile der Erfindung

Der wesentliche Vorteil der Erfindung liegt darin, dass ein Spannkeil vorgesehen ist, welcher eine Kraft derart ausübt, dass die Axialdichtung des zylinderförmigen Filtereinsatzes zuverlässig an der gehäusefesten Dichtfläche anliegt. Dieser Spannkeil ist gemäß der Erfindung am Deckel angeordnet. Das Schließen des Deckels bewirkt die Verspannung, dass heißt die Abdichtung des Filtereinsatzes. Das Öffnen des Deckels bewirkt ein Lösen des Filtereinsatzes und damit ein einfaches Austauschen. Die Erfindung sieht vor, dass sich der Spannkeil in eine Lasche des Filtereinsatzes einführen läßt. Zur Abstützung des Spannkeils ist gehäusefest eine Abstützfläche oder ein weiteres Element vorgesehen. Der Spannkeil ist zumindest teilweise keilförmig ausgestaltet, so dass eine einfache Krafteinleitung beim Schließen des Deckels bzw. beim Einführen des Spannkeils möglich ist.

Eine weitere Ausgestaltung der Erfindung sieht vor, auf der, der Dichtfläche gegenüberliegenden Seite des Filtereinsatzes eine Axialführung vorzusehen, dass heißt, auf dieser Seite stützt sich der Filtereinsatz an dem Gehäuse ab, und ist axialtolerant befestigt.

Ein Vorteil dieser Lagerung des Filtereinsatzes liegt darin, dass das Filtermedium keine axialen Verspannkräfte aufnehmen muss. Außerdem kann das Filtergehäuse selbst schwächer dimensioniert werden, da dieses nicht in den Kraftfluß eingebunden ist.

Gemäß einer Ausgestaltung der Erfindung besteht der Filtereinsatz aus einem zick-zack-förmig gefalteten Filterpapier oder Filtervlies, dieses weist eine sehr hohe Staubaufnahmekapazität, gepaart mit einem geringen Durchflußwiderstand auf. Die Stirnendscheiben dieses Filtereinsatzes bestehen aus einem thermoplastischen Kunststoff. Der Filtereinsatz läßt sich damit in einfacher Weise thermisch entsorgen.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigen
- Figur 1: die schematische Darstellung eines Details der Filtereinrichtung
- Figur 2: eine Querschnittdarstellung eines Filtereinsatzes
- Figur 3: die Draufsichtdarstellung auf den in Figur 2 gezeigten Filtereinsatz

### Beschreibung der Ausführungsbeispiele

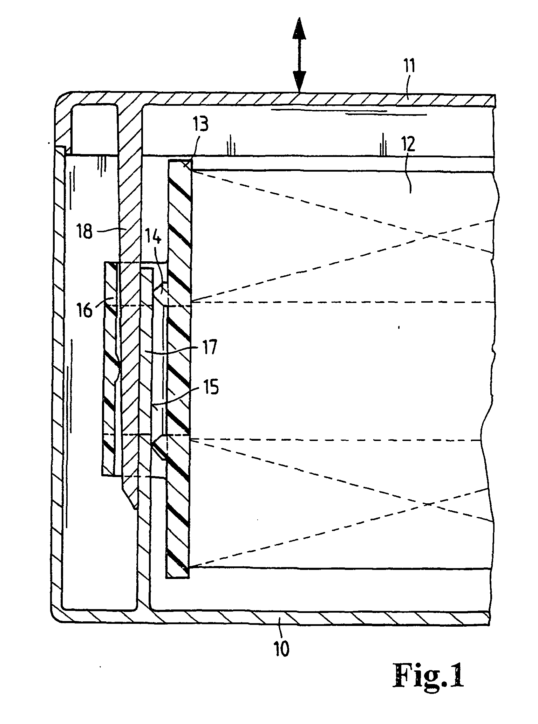

Die schematische Darstellung in Figur 1 zeigt ein Filtergehäuse 10 in einer Detaildarstellung sowie einen Gehäusedeckel 11. In dem Filtergehäuse ist ein Filterelement 12 angeordnet. Dies besteht aus einem zick-zack-förmig gefalteten Filtermedium mit einer Stirnscheibe 13. Auf diese Stirnscheibe 13 ist ein Dichtungsring 14 aufgeklebt oder mit der Stirnscheibe 13 verschweißt. Der Dichtungsring liegt an einer Dichtfläche 15 des Filtergehäuses 10 an. Die Dichtfläche umschließt den hier nicht dargestellten Reinluftauslass. Die Stirnscheibe ist mit einer laschenförmigen Auskragung 16 versehen. Zwischen dieser laschenförmigen Auskragung 16 und einer Abstützung 17 wird ein Spannkeil 18 eingeschoben. Der Spannkeil 18 ist an dem Gehäusedeckel befestigt und bewirkt eine Axialkraft auf den Filtereinsatz 12 derart, dass eine gute Dichtwirkung zwischen dem Dichtungsring 14 und der Dichtfläche 15 erzielt wird.

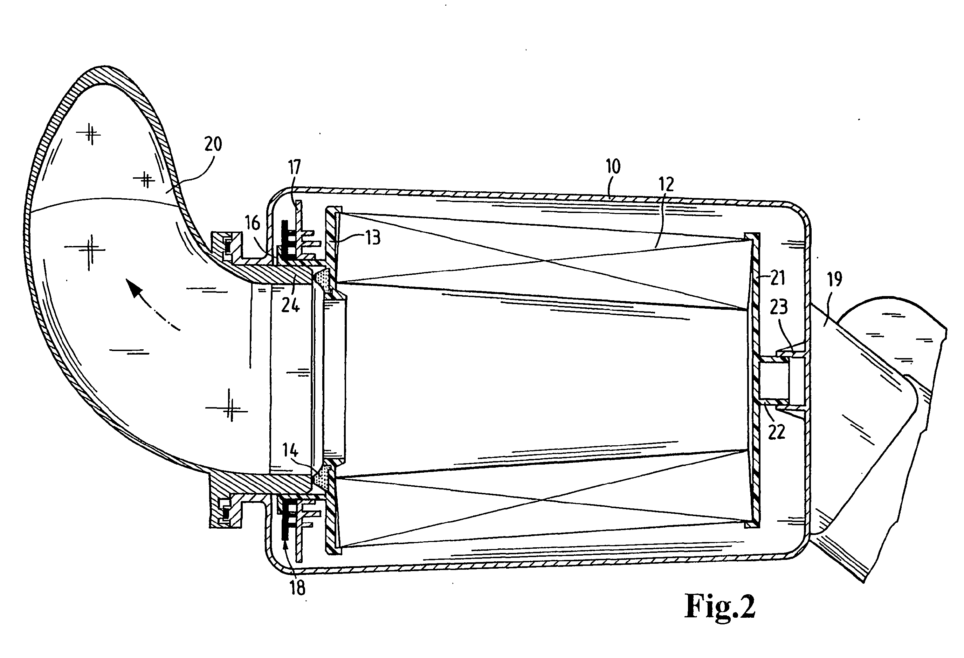

Figur 2 zeigt den Gesamtaufbau einer Filtereinrichtung in einer Schnittdarstellung. (Gleiche Teile sind mit gleichen Bezugszeichen versehen.) Zu erkennen ist an dem rechtsseitigen Ende der Rohlufteinlass 19 und an dem linksseitigen Ende der Reinluftauslass 20. Das Filtergehäuse 10 ist mit einem Filtereinsatz 12 bestückt, der Filtereinsatz ist an dem rechtsseitigen Ende mit einer Endscheibe 21 versehen. Diese weist einen Führungsansatz 22 auf. Der Führungsansatz greift in einen Führungszylinder 23, welcher am Gehäuse befestigt ist. Diese Lagerung ermöglicht eine radiale Verschiebbarkeit und einen guten Toleranzausgleich bei unterschiedlichen Filtereinsatzlängen. Der Filtereinsatz ist an der linken Seite mit einer Stirnscheibe 13 ausgestattet. Diese ist mit einer Auskragung 16 versehen, welche sich über einen Reinluftstutzen 24 erstreckt und für die axiale Führung des Filtereinsatzes sorgt. Der Dichtungsring 14 besteht in diesem Ausführungsbeispiel aus PUR-Schaum und ist an die Endscheibe angeschäumt. Am Gehäuse befindet sich eine Abstützung 17. Zwischen Abstützung 17 und Auskragung 16 ist ein Spannkeil 18 eingefügt. Dieser Spannkeil 18 zieht den kompletten Filtereinsatz nach links gegen den Reinluftstutzen 24 und bewirkt eine zuverlässige Abdichtung zwischen Reinluft und Rohluft.

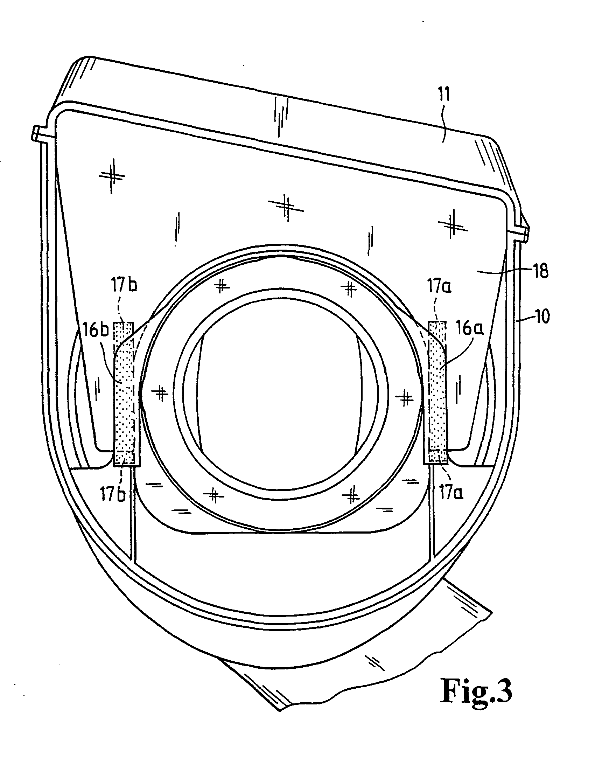

Figur 3 zeigt eine Draufsicht auf den Spannkeil 18 der mit dem Gehäusedeckel 11 starr verbunden ist. Die Auskragungen 16a, 16b an der Stirnscheibe des Filtereinsatzes umfassen den Spannkeil 18. Dieser Spannkeil 18 stützt sich an den Abstützungen 17a, 17b ab , so dass über einen vordefinierten Bereich die Spannkräfte für die Stirnscheibe des Filterelements eingeleitet werden können. Beim Abnehmen des Gehäusedeckels 11 wird der Spannkeil 18 ebenfalls mit abgezogen. Das Filterelement kann in einfacher Weise aus dem Filtergehäuse herausgenommen und durch ein neues ersetzt werden.

## Patentansprüche

1. Filtereinrichtung insbesondere zur Filtration der Ansaugluft einer Brennkraftmaschine bestehend aus einem Gehäuse (10) mit einem Rohlufteinlass (19) einem Reinluftauslass (20) und einem in dem Gehäuse angeordneten austauschbaren Filtereinsatz, (12) welcher den Rohluftbereich des Gehäuses von dem Reinluftbereich trennt und welcher im wesentlichen zylinderförmig gestaltet ist, wobei an wenigstens einer Stirnscheibe (13) eine Axialdichtung vorgesehen ist, welche in Verbindung mit einer Dichtfläche des Gehäuses (10) die Abdichtung zwischen Rohluftbereich und Reinluftbereich bewirkt, ein Spannkeil (18) vorgesehen ist, welcher eine Kraft auf den Filtereinsatz (12) ausübt, derart, dass die Axialdichtung (14) zuverlässig an der Dichtfläche (15) des Gehäuses (10) anliegt **dadurch gekennzeichnet dass**, der Filtereinsatz (12) an der Stirnscheibe (13) wenigstens eine Lasche (16) aufweist und der Spannkeil (18) an dieser Lasche (16) entlang gleitet, wobei sich der Spannkeil (18) an einer gehäusefesten Abstützung (17) oder an der Dichtfläche (15) des Gehäuses (10) abstützt.

2. Filtereinrichtung nach Anspruch 1, **dadurch gekennzeichnet, daß** der Spannkeil (18) mit einem Deckel (11) für das Gehäuse (10) verbunden ist und beim Schließen des Deckels (11) eine Verspannung des Filtereinsatzes (12) bewirkt.

3. Filtereinrichtung nach einem der vorherigen Ansprüche, **dadurch gekennzeichnet, daß** auf der Dichtseite gegenüberliegenden Seite des Filtereinsatzes (12) dieser am Gehäuse (10) axial geführt ist.

4. Filtereinrichtung nach einem der vorherigen Ansprüche, **dadurch gekennzeichnet, daß** der Filtereinsatz (12) aus einem zick-zack-förmig gefalteten Filtermedium, insbesondere Filterpapier oder Filtervlies besteht, welches selbsttragend ist und an den Stirnseiten mit thermoplastischen Stirnscheiben (13) versehen ist, wobei die Axialdichtung (14) über eine PUR-Schaumdichtung an der, dem Reinluftauslass (20) zugewandten Stirnscheibe (13) erfolgt.

5. Filtereinsatz insbesondere zur Verwendung in einer Filtereinrichtung nach Anspruch 1, bestehend aus einem zick-zack-förmig gefalteten Filterpapier oder Filtervlies, welches selbsttragend ist und an den Stirnseiten mit thermoplastischen Stirnscheiben (13) versehen ist, wobei an wenigstens einer Stirnscheiben (13) wenigstens eine Lasche (16) vorgesehen ist in welcher ein Spannkeil (18) eingreift zur Axialverschiebung des Filtereinsatzes (12).

## Claims

1. Filter device more especially for the filtration of the intake air of an internal combustion engine, the said filter device comprising a housing (10) with an unfiltered air inlet (19), a filtered air outlet (20) and a replaceable filter insert (12) that is disposed in the housing, the said filter insert separating the unfiltered air region of the housing from the filtered air region and being substantially cylinder-shaped, wherein on at least one end disc (13) an axial seal is provided, which in conjunction with a sealing face of the housing (10) effects the sealing between the unfiltered air region and the filtered air region, a clamping wedge (18) is provided which exerts a force onto the filter insert (12), in such a manner that the axial seal (14) abuts against the sealing face (15) of the housing (10) in a reliable manner, **characterised in that** the filter insert (12) includes at least one bracket (16) at the end disc and the clamping wedge (18) slides along on the said bracket (16), wherein the clamping wedge (18) is supported on a supporting means (17) that is secured to the housing or on the sealing face (15) of the housing (10).

2. Filter device according to claim 1, **characterised in that** the clamping wedge (18) is connected to a cover (11) for the housing (10) and the closing of the cover (11) causes the clamping of the filter insert (12).

3. Filter device according to one of the preceding claims, **characterised in that** the filter insert (12) is guided in an axial manner at the housing (10) on the side of the said filter insert situated opposite the sealing side.

4. Filter device according to one of the preceding claims, **characterised in that** the filter insert (12) is produced from a filtering medium that is folded in a zigzag shape, more especially filter paper or a non-woven filter fabric, which is self-supporting and is provided with thermoplastic end discs (13) at the end faces, wherein the axial seal (14) is effected by means of a PUR foam seal on the end disc (31) that faces the filtered air outlet (20).

5. Filter insert more especially for use in a filter device according to claim 1, the said filter insert comprising a filter paper or a non-woven filter fabric folded in a zigzag shape, which is self-supporting and is provided with thermoplastic end discs (13) at the end faces, wherein at least one bracket (16) is provided on at least one end disc (13), a clamping wedge (18) engaging in the said bracket for the axial displacement of the filter insert (12).

## Revendications

1. Dispositif de filtre, en particulier pour le filtrage de l'air d'admission d'un moteur à combustion interne, se composant d'un boîtier (10) avec une entrée d'air brut (19), une sortie d'air pur (20) et une garniture de filtre remplaçable (12) qui dans le boîtier sépare la zone d'air brut du boîtier et la zone d'air pur, et est de forme sensiblement cylindrique, dans lequel sur au moins un disque frontal (13) un joint d'étanchéité axiale assure l'étanchéité entre la zone d'air brut et la zone d'air pur en relation avec une surface d'étanchéité du boîtier (10), et un coin de serrage (18) exerce sur la garniture de filtre (12), une force une force telle que le joint d'étanchéité axiale (14) s'applique de façon fiable sur la surface d'étanchéité (15) du boîtier (10),
**caractérisé en ce que**
la garniture de filtre (12) présente sur le disque frontal (13) au moins une patte (16) et le coin de serrage (18) glisse le long de cette patte (16), le coin de serrage (18) s'appuyant sur un appui (17) solidaire du boîtier ou sur la surface d'étanchéité (15) du boîtier (10).

2. Dispositif de filtre selon la revendication 1,
**caractérisé en ce que**
le coin de serrage (18) est assemblé à un couvercle (11) pour le boîtier (10) et provoque un serrage de la garniture de filtre (12) lors de la fermeture du couvercle (11).

3. Dispositif de filtre selon l'une quelconque des revendications précédentes,
**caractérisé en ce que**
la garniture de filtre (12) est guidée axialement sur le côté du boîtier (10) opposé au côté d'étanchéité.

4. Dispositif de filtre selon l'une quelconque des revendications précédentes,
**caractérisé en ce que**
la garniture de filtre (12) se compose d'un moyen de filtre plié en zigzag, en particulier du papier filtre ou de la toile de filtre, qui est autoportant et pourvu de disques frontaux thermoplastiques (13) dans ses faces frontales, dans lequel l'étanchéité axiale (14) est réalisée par un joint en mousse de PUR sur le disque frontal (13) tourné vers la sortie d'air pur (20).

5. Garniture de filtre à utiliser en particulier dans un dispositif de filtre selon la revendication 1, se composant d'un papier filtre ou d'une toile de filtre plié(e) en zigzag, autoportante et pourvue de disques frontaux thermoplastiques (13) dans ses faces frontales, et dont au moins un des disques frontaux (13) comporte au moins une patte (16), dans laquelle un coin de serrage (18) s'engage pour provoquer un déplacement axial de la garniture de filtre (12).
